# FASCICULE DE BREVET EUROPEEN

(11) **EP 1 724 151 B1**
(45) Date de publication et mention de la délivrance du brevet: **03.06.2009**
(21) Numéro de dépôt: 05356148.6
(22) Date de dépôt: 06.09.2005
(51) Int. Cl.: B60P 1/00, B60P 1/30, B60P 3/14

(54) **Véhicule équipé d'un dispositif d'embarquement et de débarquement d'un matériel**
Fahrzeug mit einer Vorrichtung zur Beladung und Entladung von Gegenständen
Vehicle with a device for loading and unloading of items

(30) Priorité: 20.05.2005 FR 0505116
(43) Date de publication de la demande: 22.11.2006
(73) Titulaire: OPTIFIB, 37260 Monts (FR)
(72) Inventeur: Jacquin, Olivier, 37300 Joue les Tours (FR); Turlotte, Etienne, 37100 Tours (FR)
(74) Mandataire: Delorme, Nicolas

(56) Documents cités:
- US-A- 4 015 737
- US-A- 5 967 736
- US-A- 6 077 024

## Description

La présente invention concerne un véhicule équipé d'un dispositif d'embarquement et de débarquement d'un matériel, selon le préambule de la revendication 1.

Un tel véhicule est connu du document US 5 967 736 A.

Dans le domaine du balisage routier temporaire et de la sécurité routière, il peut être nécessaire de déposer pour une action temporaire un matériel le long d'une voie de circulation. Il peut, par exemple, s'agir d'une borne lumineuse, d'un radar de contrôle de vitesse ou d'un détecteur de comptage de véhicules.

Or, ce type de matériel peut être relativement lourd ; ceci fait que sa mise en place peut nécessiter plusieurs personnes.

Un but de l'invention est de proposer un véhicule de transport de matériel notamment de matériel d'équipement temporaire de voirie qui permette une mise en oeuvre de ce matériel par une seule personne.

L'invention a essentiellement pour objet un véhicule équipé d'un dispositif d'embarquement et de débarquement d'un matériel, notamment d'un matériel de voirie, le dispositif comprenant des moyens permettant de faire coulisser le matériel entre une position dans laquelle le matériel est à l'intérieur du véhicule et une position dans laquelle le matériel est à l'extérieur du véhicule et des moyens permettant de faire basculer le matériel depuis une position horizontale par rapport au véhicule vers une position verticale par rapport au véhicule.

La base de l'invention est de proposer d'équiper un véhicule d'un dispositif d'embarquement et de débarquement qui présente une cinématique à double mouvement pour permettre à un opérateur unique d'embarquer depuis le sol un matériel potentiellement lourd jusqu'à un véhicule et de débarquer depuis ce vehicle jusqu'à sol ce matériel.

Selon l'invention, le dispositif comprend un chariot mobile en translation entre une position rentrée dans laquelle le chariot est à l'intérieur du véhicule et une position sortie dans laquelle le chariot est à l'extérieur du véhicule, le chariot supportant un berceau pivotant pouvant recevoir un matériel, notamment matériel de voirie; le berceau pouvant basculer, lorsque le chariot est en position sortie, depuis une position horizontale par rapport au chariot jusqu'à une position verticale, par rapport au chariot, d'embarquement ou de débarquement du matériel.

De façon préférée, le dispositif comprend des moyens de verrouillage du chariot par rapport au véhicule en position rentrée du chariot. Ces moyens de verrouillage qui peuvent comprendre un verrou assurent un blocage du chariot et évite des mouvements non sollicités de celui-ci.

De même, le dispositif peut comprendre des moyens de verrouillage du berceau par rapport au chariot.

Selon une possibilité de réalisation, le chariot peut comprendre deux longerons parallèles reliés par au moins deux entretoises, chaque longeron étant engagé dans une glissière fixée au véhicule.

Pour faciliter le mouvement du chariot par rapport au véhicule, chaque glissière présente au moins deux galets et/ou douille à billes sur lesquels coulisse chacun des longerons du chariot.

En outre, le berceau présente à chacune de ses extrémités une ridelle transversale ce qui permet assurer le retenue longitudinale d'un matériel se trouvant dans le berceau.

Dans une forme d'exécution, le véhicule présente une superstructure comprenant une paroi postérieure dans laquelle est ménagée une porte, un portique et un panneau pivotant articulé par rapport à la paroi postérieure, le panneau pouvant être orienté dans une position de repli dans laquelle le panneau est en appui sur le portique et une position déployée dans laquelle le panneau est orienté dans le prolongement de la paroi postérieure. Le panneau peut être de façon avantageuse un panneau d'affichage lumineux.

Dans façon avantageuse, le véhicule embarque des moyens de communication à distance avec le matériel de voirie ; ceci permet par exemple d'afficher sur le panneau des informations recueillies telles que des mesures de vitesse de véhicules relevées par le matériel dans le cas où celui-ci est un radar de mesure de vitesse.

Pour sa bonne compréhension, l'invention est décrite en référence aux dessins ci-annexés représentant à titre d'exemple non limitatif une forme de réalisation d'un véhicule selon celle-ci.

Figures 1 et 2 représentent le véhicule respectivement en position de transport et en position de débarquement ou d'embarquement d'un matériel notamment matériel de voirie ;

Figure 3 représente en vue de face le véhicule en configuration de transport.

Figure 4 représente en vue arrière le véhicule en configuration de transport.

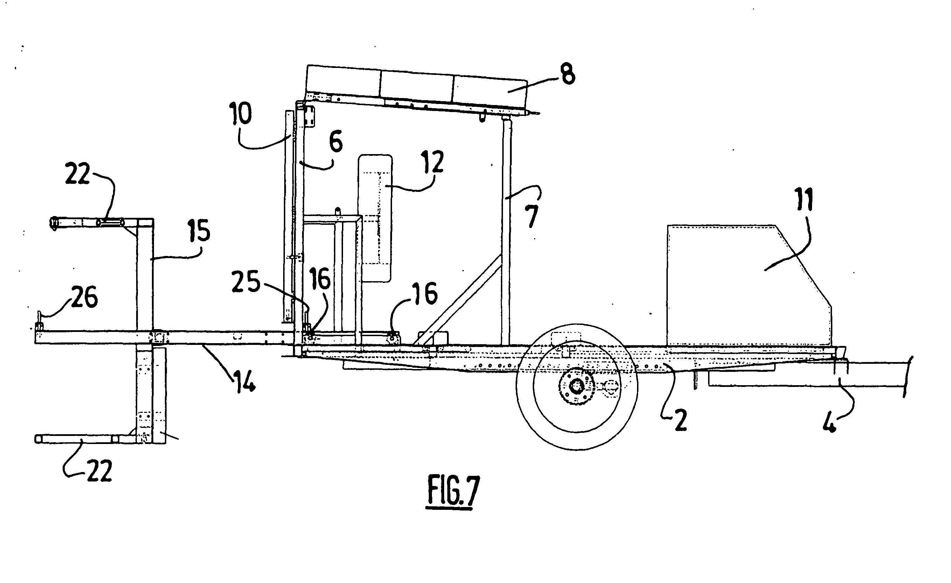

Figure 5, figure 6 et figure 7 représentent en vue de face le véhicule au cours de son passage de sa configuration de transport à sa configuration de débarquement ou d'embarquement d'un matériel.

Préliminairement, il est précisé que les termes longitudinale, transversale, verticale, horizontale sont donnés par rapport à un référentiel lié au véhicule.

Comme on peut le voir sur le dessin, le véhicule dans l'exemple de réalisation représenté est une remorque ; de manière classique cette remorque présente un châssis 2 sur lequel sont fixés un essieu 3 et un timon 4.

On note également que ce véhicule, qui est donc ici un véhicule tracté, reçoit une superstructure 5 qui, dans l'exemple représenté, est constituée d'une paroi arrière 6 et d'un portique 7 ; la paroi arrière 6 et le portique 7 supportent un panneau pivotant 8. Le panneau 8 peut être un panneau d'affichage de messages de signalisation.

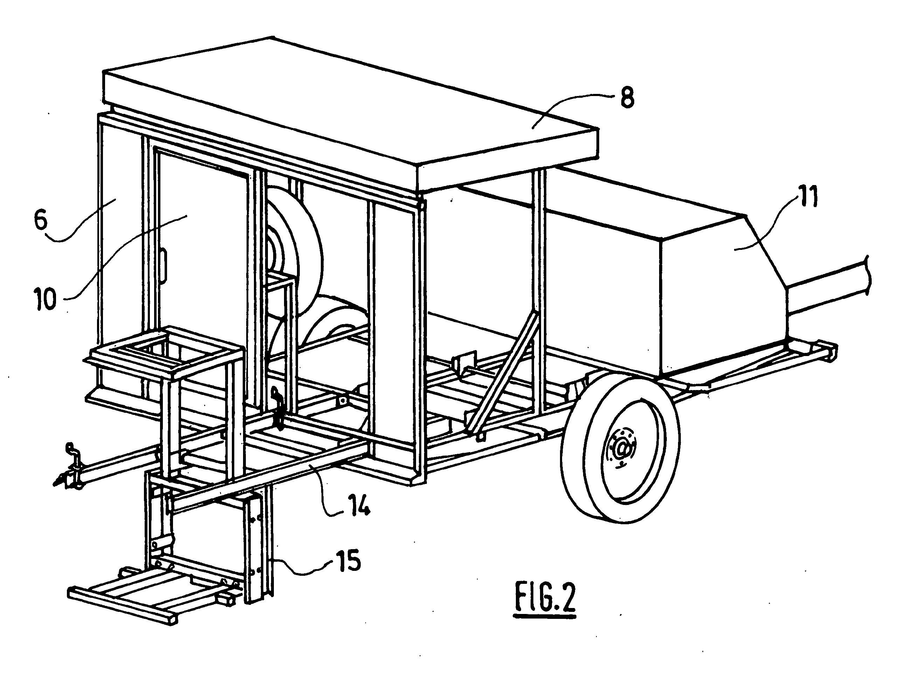

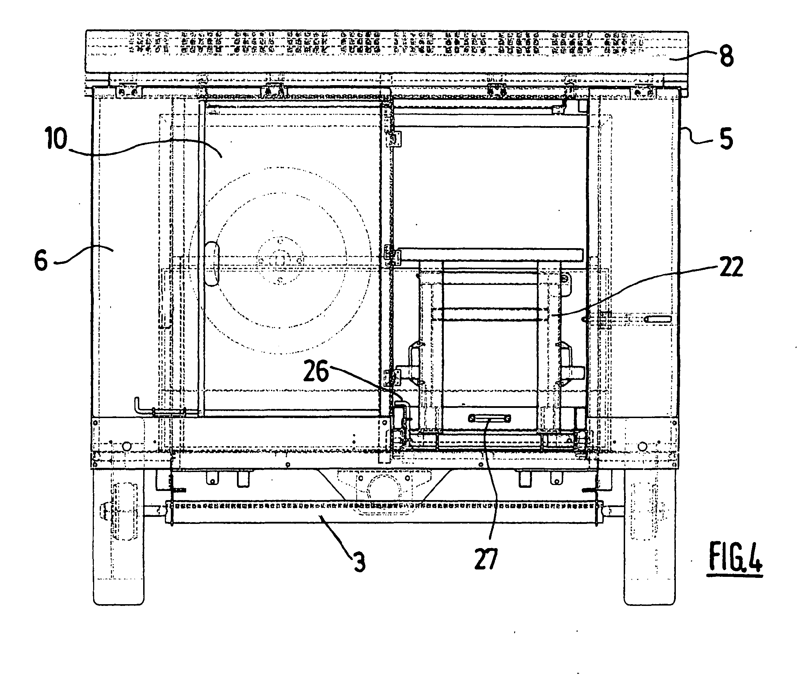

Comme cela apparaît notamment aux figures 2 et 4, la paroi postérieure 6 de la superstructure 5 présente une porte 10 qui permet d'accéder à l'espace intérieur de la superstructure 5. Il est également à noter que le châssis 2 supporte un coffre 11 qui est situé sur la partie antérieure du châssis 2, ce coffre 11 peut notamment renfermer un groupe électrogène ou des batteries.

Dans le véhicule représenté sur les figures, on peut noter qu'une roue de secours 12 est positionnée à l'intérieur de la superstructure.

De façon tout à fait spécifique à l'invention, le véhicule est équipé d'un dispositif d'embarquement et de débarquement d'un matériel. De façon préférentielle, ce matériel est un matériel de voirie, il peut s'agir, par exemple, d'une borne de signalisation mobile, d'un radar de contrôle de vitesse ou d'un détecteur de comptage de véhicules.

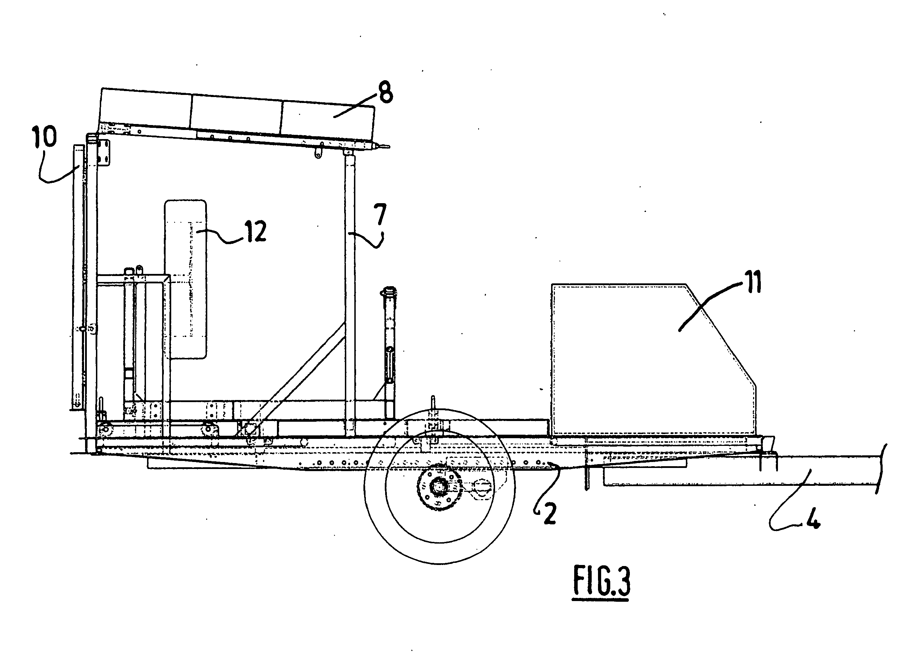

Le dispositif d'embarquement et de débarquement d'un matériel est essentiellement constitué d'un chariot 14 sur lequel est positionné de manière pivotante un berceau 15. Comme on peut le voir, en particulier sur les figures 3, 5 et 6, le véhicule est équipé de deux glissières 16 parallèles qui sont positionnées face à la porte 10 dont la paroi postérieure est équipée.

Le chariot 14 est un élément mécano soudé qui peut être constitué de deux longerons 1 parallèles qui sont maintenues entre eux par des entretoises 18. Le chariot 14 peut coulisser dans les glissières 16, ce mouvement de translation étant facilité par des galets 19 et/ou douilles à billes dont les glissières 16 sont équipées.

En ce qui concerne le berceau 15, celui-ci est également un ensemble mécano soudé constitué d'éléments longitudinaux 20 maintenus par des entretoises 21 transversales. Comme cela apparaît sur les figures, le berceau 15 présente à chacune de ses extrémités une ridelle 22 transversale.

Le berceau 15 est positionné à l'extrémité libre du chariot 14 et est relié à celui-ci par une liaison pivot qui dans l'exemple représenté est constitué de paliers 24.

Il apparaît donc que le dispositif d'embarquement et de débarquement présente une cinématique à double mouvement par rapport au véhicule. En effet, le dispositif peut, d'une part, grâce au mouvement de translation du chariot 14 par rapport à ses glissières 16 coulisser entre une position dans laquelle le dispositif est totalement enfermé dans la superstructure et une position dans laquelle le dispositif se trouve extrait de la superstructure et est maintenu en porte à faux par rapport au véhicule ; d'autre part, le berceau 15 peut pivoter par rapport au chariot 14 entre une position dans laquelle le berceau 15 est sensiblement parallèle au chariot 14 et une position dans laquelle le berceau 15 est perpendiculaire au chariot 14 et se trouve, donc, orienté sensiblement à la verticale.

On note que le dispositif intègre plusieurs moyens de verrouillage qui permettent de bloquer le dispositif dans certaines de ses positions. Dans l'exemple représenté, on peut voir que le véhicule est équipé à cet effet d'un verrou 25 qui est positionné au niveau d'une des glissières 16. Ce verrou 25 présente une targette qui peut être engagée dans un perçage ménagé dans le chariot 14. De manière pratique, le chariot 14 est équipé de deux perçages au niveau de son longeron 17 qui est adjacent au verrou 25; un perçage correspond à la position rentrée du dispositif et un perçage correspond à la position sortie du dispositif. Cela permet de maintenir le dispositif dans ces deux positions extrêmes. Selon une possibilité, la targette du verrou est sollicitée par un ressort qui la maintient engagée dans le perçage pratiqué dans le rail. Ainsi donc seule l'intervention d'un opérateur qui soulève la targette permet de libérer le châssis 2 pour lui faire subir un mouvement de translation par rapport au véhicule et en fin de sa course le dispositif se trouve automatiquement verrouillé.

On note également la présence d'un autre verrou 26 situé celui-ci à l'extrémité libre du chariot 14. Ce verrou 26 est d'une structure similaire à celui qui vient d'être décrit et présente une targette sollicitée par un ressort qui peut venir maintenir le berceau 15 dans sa position dans laquelle il est parallèle au chariot 14.

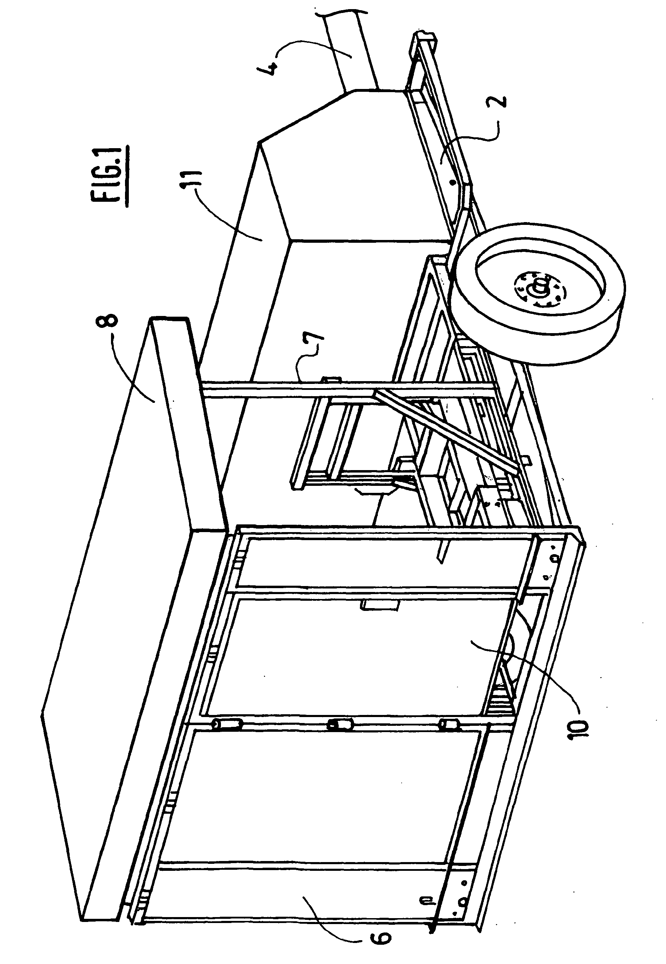

Dans la pratique la mise en oeuvre du véhicule peut se faire de la manière suivante : en prenant comme référence le véhicule représenté à la figure 1, un opérateur peut donc tout d'abord ouvrir la porte 10 qui se trouve dans la paroi arrière du véhicule. Il peut ensuite exercer une traction sur le dispositif ; à cet effet on peut envisager d'équiper celui-ci d'une poignée 27, qui peut-être comme cela est représenté sur la figure 4, positionnée sur le berceau 15.

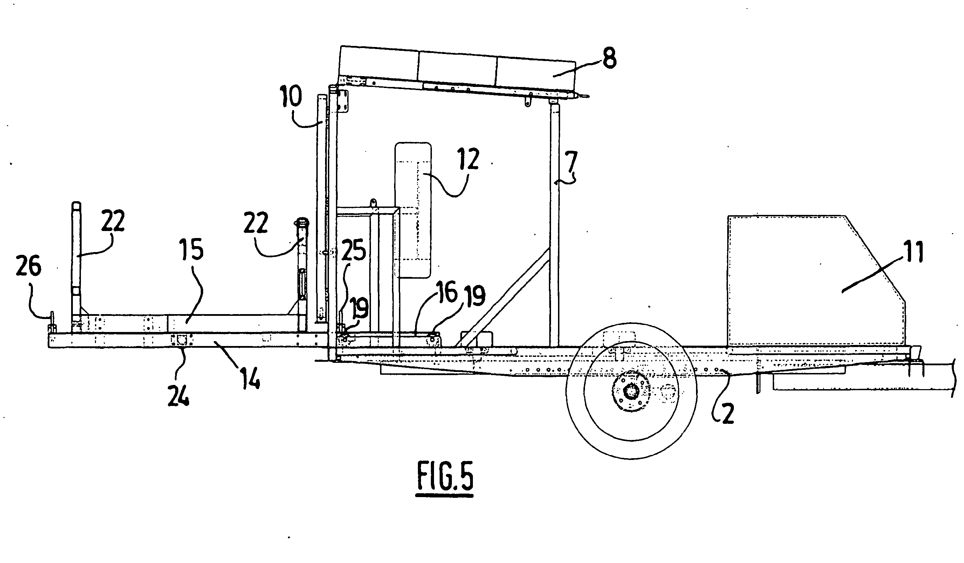

En exerçant une traction sur le dispositif, celui-ci peut-être amené dans une position telle que celle qui est représentée à la figure 5. Il s'agit d'une position dans laquelle le châssis 2 a coulissé par rapport aux glissières 16 et fait que le dispositif se trouve maintenant à l'extérieur du véhicule d'une distance telle que le berceau 15 est totalement en porte à faux par rapport au véhicule.

Il doit être noté que cette opération n'a été possible qu'en déverrouillant le verrou 25 placé sur les glissières 16. L'opérateur peut alors en déverrouillant le verrou 26 qui se trouve à l'extrémité libre du chariot 14, autoriser la rotation du berceau 15. La rotation du berceau 15 peut être assistée par un ressort ou par un vérin. II peut également être envisagé de positionner l'axe de rotation du berceau 15 par rapport au chariot 14 à une position telle que le poids dans le berceau 15 le fasse naturellement basculer celui-ci jusqu'à une position verticale du berceau 15. Il peut, en outre, être envisagé d'assister le mouvement du berceau 15 par un ressort ou un vérin à gaz.

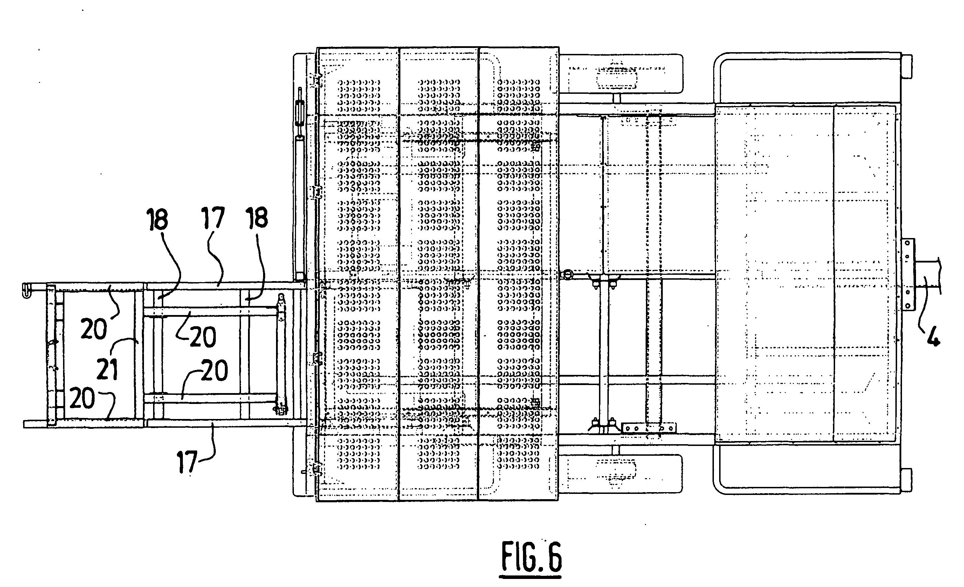

Lorsque le berceau 15 est dans la position représentée à la figure 6 c'est-à-dire la position d'embarquement et de débarquement, il est alors très simple d'approcher un matériel qui est adapté aux dimensions du berceau 15, de le placer sur le berceau 15 puis de faire basculer le berceau 15 jusqu'à sa position dans laquelle il est à l'horizontale ; le verrouillage du berceau 15 dans cette position peut se faire de manière automatique grâce au fait que la targette du verrou 26 vient s'engager dans un perçage pratiqué dans le berceau 15. L'opérateur n'a plus alors qu'à exercer une poussée dans le sens horizontal sur le dispositif pour que celui-ci coulisse par rapport aux glissières 16 et vienne rentrer dans la superstructure du véhicule. Le véhicule est alors en configuration de transport.

On voit ainsi que, grâce au dispositif selon l'invention, il est possible à un opérateur unique d'embarquer dans un véhicule un matériel qui peut être d'un poids relativement important puisqu'on peut estimer qu'un matériel de 50 à 180 kg peut être embarqué grâce au dispositif selon l'invention.

On peut préciser qu'un mode de mise en oeuvre particulièrement avantageux de l'invention prévoit que dans le cas d'un véhicule équipé de moyens de communication avec le matériel embarqué, il peut être envisagé de déposer un matériel tel qu'un radar de contrôle de vitesse sur le bas côté d'une voie de circulation en amont de quelques centaines de mètres du véhicule de telle sorte que le véhicule puisse communiquer avec le matériel et dans le cas où le matériel est un radar de contrôle de vitesse puisse afficher sur le panneau lumineux des informations liées au véhicule dont la vitesse est contrôlée par le radar.

Bien entendu, l'invention n'est pas limitée au mode de réalisation écrit ci-dessus à titre d'exemple non limitatif mais elle en embrasse au contraire toutes les formes de réalisation définies par les revendications. Par exemple, le véhicule pourrait être une remorque à une ou deux essieux le véhicule pourrait par ailleurs être un véhicule automobile motorisé de type fourgon ou camion plateau.

## Revendications

1. Véhicule comportant un châssis (2) sur lequel est fixé au moins un essieu (3), le véhicule étant équipé d'un dispositif d'embarquement et de débarquement d'un matériel notamment d'un matériel de voirie, le dispositif comprenant des moyens (14) permettant de faire coulisser le matériel entre une position dans laquelle le matériel est à l'intérieur du véhicule et une position dans laquelle le matériel est à l'extérieur du véhicule et des moyens (15) permettant de faire basculer le matériel depuis une position horizontale par rapport au véhicule vers une position vertical par rapport au véhicule;
le dispositif comprenant un chariot (14) mobile en translation entre une position rentrée dans laquelle le chariot (14) est à l'intérieur du véhicule et une position sortie dans laquelle le chariot (14) est à l'extérieur du véhicule, le véhicule étant **caractérisé en ce que** le chariot (14) supporte un berceau (15) pivotant pouvant recevoir un matériel, notamment matériel de voirie; le berceau (15) pouvant basculer, lorsque le chariot (14) est en position sortie, depuis une position horizontale par rapport au chariot (14) jusqu'à une position verticale, par rapport au chariot (14), d'embarquement ou de débarquement du matériel.

2. Véhicule selon la revendication 1, **caractérisé en ce que** le dispositif comprend des moyens de verrouillage du chariot (14) par rapport au véhicule en position rentrée du chariot (14).

3. Véhicule selon la revendication 1 ou la revendication 2, **caractérisé en ce que** le dispositif comprend des moyens de verrouillage du berceau (15) par rapport au chariot (14).

4. Véhicule selon l'une des revendications 1 à 3, **caractérisé en ce que** le chariot (14) comprend deux longerons (17) parallèles reliés par au moins deux entretoises (18), chaque longeron (17) étant engagé dans une glissière (16) fixée au véhicule.

5. Véhicule selon la revendication 4, **caractérisé en ce que** chaque glissière présente au moins deux galets (19) et/ou douilles à billes sur lesquels coulisse chacun des longerons (17) du chariot (14).

6. Véhicule selon l'une des revendications 1 à 4, **caractérisé en ce que** le berceau (15) présente à chacune de ses extrémités une ridelle transversale (22).

7. Véhicule selon l'une des revendications 1 à 6, **caractérisé en ce que** le véhicule présente une superstructure (5) comprenant une paroi postérieure (6) dans laquelle est ménagée une porte (10), un portique (7) et un panneau (8) pivotant articulé par rapport à la paroi postérieure (6), le panneau (8) pouvant être orienté dans une position de repli dans laquelle le panneau est en appui sur le portique (7) et une position déployée dans laquelle le panneau (8) est orienté dans le prolongement de la paroi postérieure (6).

8. Véhicule selon l'une des revendications 1 à 7, **caractérisé en ce que** le véhicule embarque des moyens de communication à distance avec le matériel de voirie.

## Claims

1. Vehicle comprising a chassis (2) on which at least one axle (3) is fastened, the vehicle being equipped with a device for loading and unloading equipment, in particular highway equipment, the device comprising means (14) for sliding the equipment between a position in which the equipment is inside the vehicle and a position in which the equipment is outside the vehicle, and means (15) for tilting the equipment from a horizontal position with respect to the vehicle to a vertical position with resp ect to the vehicle; the device comprising a carriage (14) which can be moved translationally between a retracted position in which the carriage (14) is inside the vehicle , and an extended position in which the carriage (14) is outside the vehicle, the vehicle being **characterized in that** the carriage (14) bears a pivoting cradle (15) capable of receiving equipment, in particular highway equipment; the cradle (15) being able to tilt, when the carriage (14) is in an extended position, from a horizontal position with respect to the carriage (14) to a vertical position, with respect to the carriage (14), for loading or unloading the equipment.

2. Vehicle according to Claim 1, **characterized in that** the device comprises means for locking the carriage (14) with re spect to the vehicle when the carriage (14) is in a retracted position.

3. Vehicle according to Claim 1 or Claim 2, **characterized in that** the device comprises means for locking the cradle (15) with respect to the carriage (14).

4. Vehicle according to on e of Claims 1 to 3, **characterized in that** the carriage (14) comprises two parallel longitudinal members (17) connected by at least two cross -struts (18), each longitudinal member (17) being engaged in a guide rail (16) fastened to the vehicle.

5. Vehicle according to Claim 4, **characterized in that** each guide rail has at least two rollers (19) and/or ball bushings on which each of the longitudinal members (17) of the carriage (14) slides.

6. Vehicle according to one of Claims 1 to 4, **characterized in that** the cradle (15) is provided at each of its ends with a transverse side member (22).

7. Vehicle according to one of Claims 1 to 6, **characterized in that** the vehicle has a superstructure (5) comprising a rear wall (6) in which a door (10) is made, a gantry (7), and a panel (8) articulated in a pivoting manner with respect to the rear wall (6), the panel (8) being able to be oriented into a folded position, in which the panel bears against the gantry (7), and a deployed position in which the panel (8) is oriented into alignment with the rear wall (6).

8. Vehicle according to one of Claims 1 to 7, **characterized in that** the vehicle is provided on board with means for remote communication with the highway equipment.

## Patentansprüche

1. Fahrzeug mit einem Fahrgestell (2), an dem min - destens eine Achse (3) befestigt ist, wobei das Fahrzeug mit einer Vorrichtung zur Beladung und Entladung von Gerätschaften, insbesondere Straßen - verkehrsgerätschaften, ausgestattet ist, wobei die Vorrichtung Mittel (14), dank derer die Gerät - schaften zwischen einer Position, in der sich die Gerätschaften im Inneren des Fahrzeugs befinden, und einer Position, in der sich die Gerätschaften außerhalb des Fahrzeugs befinden, geschoben werden können, sowie Mittel (15) umfasst, dank derer die Gerätschaften aus einer bezüglich des Fahrzeugs horizontalen Position in eine bezüglich des Fahr - zeugs vertikale Position gekippt werden können, wobei die Vorrichtung einen Karren (14) umfasst, der zwischen einer eingefahrenen Position, in der sich der Karren (14) im Inneren des Fahrzeugs be - findet, und einer ausgefahrenen Position, in der sich der Karren (14) außerhalb des Fahrzeugs be - findet, translatorisch beweglich ist, wobei das Fahrzeug **dadurch gekennzeichnet ist, dass** der Karren (14) ein Schwenkbett (15) stützt, das Gerät - schaften, insbesondere Straßenverkehrsgerätschaf - ten, aufnehmen und aus einer bezüglich des Karrens (14) horizontalen Position in eine bezüglich des Karrens (14) vertikale Position zum Beladen oder Entladen der Gerätschaften kippen kann, wenn der Karren (14) in der ausgefahrenen Position ist.

2. Fahrzeug nach Anspruch 1, **dadurch gekennzeichnet, dass** die Vorrichtung Mittel zur Verriegelung des Karrens (14) bezüglich des Fahrzeugs in der eingefahrenen Position des Karrens (14) umfasst.

3. Fahrzeug nach Anspruch 1 oder 2, **dadurch gekennzeichnet, dass** die Vorrichtung Mittel zur Verrie - gelung des Betts (15) bezüglich des Karrens (14) umfasst.

4. Fahrzeug nach einem der Ansprüche 1 bis 3, **dadurch gekennzeichnet, dass** der Karren (14) zwei parallele, über mindestens zwei Abstandhalter (18) ver - bundene Längsträger (17) umfasst, wobei jeder Längsträger (17) in einer am Fahrzeug befestigten Führungsschiene (16) in Eingriff steht.

5. Fahrzeug nach Anspruch 4, **dadurch gekennzeichnet, dass** jede Führungsschiene mindestens zwei Rollen (19) und/oder Kugelbüchsen aufweist, auf denen jeder der Längsträger (17) des Karrens (14) gleitet.

6. Fahrzeug nach einem der Ansprüche 1 bis 4, **dadurch gekennzeichnet, dass** das Bett (15) an jedem seiner Enden eine Querbordwand (22) aufweist.

7. Fahrzeug nach einem der Ansprüche 1 bis 6, **dadurch gekennzeichnet, dass** das Fahrzeug einen Aufbau (5) hat, der eine hintere Wand (6), in der eine Tür (10) eingelassen ist, einen Portalrahmen (7) und eine Schwenktafel (8) aufweist, die bezüglich der hinteren Wand (6) angelenkt ist, wobei die Tafel (8) in einer eingeklappten Position, in der die Tafel auf dem Portalrahmen (7) ruht, und in einer ausgeklappten Position, in der die Tafel (8) in der Verlängerung der hinteren Wand (6) ausge - richtet ist, ausgerichtet werden kann.

8. Fahrzeug nach einem der Ansprüche 1 bis 7, **dadurch gekennzeichnet, dass** im Fahrzeug Mittel zur abge - setzten Kommunikation mit den Straßenverkehrsge - rätschaften geladen sind.
